# EUROPEAN PATENT SPECIFICATION

(11) **EP 3 851 603 B1**
(45) Date of publication and mention of the grant of the patent: **19.03.2025**
(21) Application number: 21150744.7
(22) Date of filing: 08.01.2021
(51) Int. Cl.: E04B 7/22, E04D 3/35, B32B 3/08, B32B 5/18, B32B 27/06, E04C 2/24, B32B 3/06, B32B 3/30, B32B 7/12, B32B 15/20, B32B 27/10, B32B 27/36, B32B 29/00, E04B 1/80, E04C 2/32, E04C 2/00, B32B 27/32, B32B 15/085

(54) **INSULATION PANEL**
DÄMMPLATTE
PANNEAU D'ISOLATION

(30) Priority: 15.01.2020 BE 202005025
(43) Date of publication of application: 21.07.2021
(60) Divisional application: 24219889.3
(73) Proprietor: Unilin, BV, 8710 Wielsbeke (BE)
(72) Inventor: EL FGAIER, Faycal, 59120 Loos (FR)
(74) Representative: Unilin Technologies

(56) References cited:
- EP-A1- 2 381 048
- EP-A1- 3 388 592
- DE-A1- 2 221 538
- DE-A1- 2 263 375
- FR-A5- 2 060 647
- GB-A- 1 141 804
- GB-A- 1 347 067
- US-A1- 2008 092 474
- US-A1- 2019 003 180
- US-B2- 7 786 028
- US-B2- 7 887 900

## Description

The invention relates to insulation panels. The invention relates in particular to insulation panels which can be used to insulate pitched roofs from the outside.

More and more often, roofs are being thermally insulated. This also applies to pitched roofs, both in the construction of new buildings and in the renovation of existing ones. With pitched roofs, thermal insulation can be fitted on the inside of the pitched roof, e.g. between the roof trusses. However, it is also possible, for example during renovation, to fit this thermal insulation to the outside of the pitched roof, i.e. to the roof boarding or to the roof trusses, after which the roof covering (e.g. tiles or slates) is attached to the insulation. To this end, the necessary laths are provided on the thermal insulation. Fitting insulation panels on the outside has the advantage that there are no heat bridges and that the insulation is uninterrupted.

DE2221538A1 relates to a roofing element consisting of a vapour barrier, synthetic foam heat and sound insulating layer and an ethylene copolymer bitumen roof membrane all rigidly bonded together. The surface can be provided with protrusions.

DE2263375A1 discloses a roofing element comprising a barrier layer topped with a relief made of hooks.

EP3388592A1 relates to a self-supporting composite panel arranged to form an inclined roof. The composite panel comprises at least an element comprising an inner face, an outer face and lateral and longitudinal edges interconnecting the inner and outer faces. The composite panel comprises a thermal insulation layer, reinforcement layers as well as a water tight layer.

FR2060647A5 and US2019/003180A1 disclose other known insulation panels.

US7786028B2 relates to a flexible nonwoven mat of polymeric fibers which is liquid water transmission resistant and is suited for use as a prefabricated building construction underlayment. The mat can be provided with a slip-resistant surface.

US2008/092474 and US7887900B2 disclose a roofing sailcloth for a building. The sailcloth includes a leakproof layer. The roofing sailcloth is waterproof and leakproof and has improved anti-slipping effect to allow a worker to walk on the sailcloth safely and easily.

It is known to use insulation panels comprising a polyisocyanurate foam layer for the insulation of pitched roofs. These insulation panels typically have a gas-tight barrier layer on one, but usually on both sides of the insulation panel.

It is an object of the invention to provide insulation panels which make it possible to install insulation panels on the outside of pitched roofs in a smoother and in particular safer manner.

Therefore, the first aspect of the invention relates to an insulation panel as in claim 1. The insulation panel comprises a thermal insulation layer; and, on one side of the thermal insulation layer, a first barrier layer. The insulation panel is characterized by the fact that the insulation panel, on the surface of the side which comprises the first barrier layer, has a layer which forms a relief - preferably a structured relief pattern - across this surface of the insulation panel.

The expression "forms a relief" is understood to mean that irregularities are formed on the surface, or in other words, differences in height.

The insulation panel of the invention makes it possible to provide pitched roofs with insulation in a smoother, quicker and safer manner, in particular in circumstances with wintery conditions, such as much wind, snow and frost. The people who attach the insulation panels to the roof boarding usually tend to walk across the already installed insulation panels during installation. By providing the insulation panels with a relief, it is possible to walk across them in a smoother, quicker and safer way. As a result thereof, this insulation procedure can be performed more smoothly, more quickly and more safely.

The relief is formed by polymer material. More preferably, the polymer material is a thermoplast, preferably polyvinyl chloride, more preferably polyvinyl chloride containing plasticizers. Such embodiments make it readily possible to form relief.

The relief is formed by polymer material, wherein the layer which forms the relief is formed by convex coating deposits of the polymer material on the first barrier layer. More preferably, the convex coating deposits are applied as discrete amounts of polymer on a plastic film which is laminated on or in the first barrier layer. This plastic film may, for example, be a polyester plastic film; the polymer material may be, for example, polyvinyl chloride, more preferably polyvinyl chloride containing plasticizer. Alternatively, the relief may be formed by a thermoset, for example made of polyurethane.

When using polymer material to form the relief, the mass of the polymer material is preferably between 10 and 20 grams per square metre of surface area of the insulation panel, e.g. 15 g/m². Surprisingly, it has been found that such low volumes offer the cited advantages of the invention.

The thermal insulation layer comprises or consists of a foam layer. The foam layer is a foam layer comprising closed cells.

The foam layer is bonded to the first barrier layer. Preferably, this bond is produced by applying, during the production of the insulation panel, liquid material to the first barrier layer and allowing it to foam in order to form the foam layer.

Preferably, the thermal insulation layer contains or consists of a polyisocyanurate foam layer or a polyurethane foam layer.

Preferably, the thermal insulation layer contains or consists of a phenolic foam. More preferably, the phenolic foam is a phenol formaldehyde foam.

Preferably, the thermal insulation layer contains a further insulation layer, preferably glass wool or mineral wool. More preferably, the first barrier layer is provided on the foam layer.

In embodiments in which the thermal insulation layer contains or consists of a polyisocyanurate foam layer or a polyurethane foam layer, this polyisocyanurate foam layer or the polyurethane foam layer is bonded to the first barrier layer Preferably, this bond is brought about by applying liquid material to the first barrier layer during the production of the insulation panel and to allow it to foam to form the polyisocyanurate foam layer or the polyurethane foam layer.

Preferably, the first barrier layer comprises a varnish layer. This varnish layer makes it possible to form an improved bond of and with polymer material applied later to form the relief.

The relief is formed by polymer material. The polymer material which forms the relief is situated on the first barrier layer. Preferably, zones are formed by the polymer material and zones are formed by the first barrier layer - in a preferably regularly alternating way or in an irregular way - on the surface of the insulation panel which has the relief. This may be achieved by applying discrete amounts of polymer material distributed across the surface of the first barrier layer, e.g. applying point coatings by means of screen-printing or by means of structured rollers. Between the point coatings, the surface of the barrier layer is visible and accessible.

Alternatively, it is also possible for the entire surface of the first barrier layer to be covered by the polymer material forming the relief.

Not according to the invention, it is also possible to provide the relief in or on a film/foil - preferably on a plastic film - which is laminated on or in the first barrier layer. When this film/foil which comprises a relief is laminated on the barrier layer, the relief in or on the film/foil forms the relief on the surface of the insulation panel. However, it is also possible to laminate such a film/foil with relief as a layer in the barrier layer, the relief then presses through the covering layer (or layers) to form the relief on the surface of the insulation panel.

It is for example possible to laminate a film/foil which has a relief into or onto the barrier layer, in which case this relief of the film/foil forms a relief on the surface of the barrier layer, even if one or more other layers were laminated on top of the film/foil comprising a relief.

When using a film/foil, is the possible to form the relief on the film/foil by means of polymer material. As a result thereof, for example, on one surface of the insulation panel zones may be formed by polymer material (and form a relief) and zones may be formed by the film/foil itself. The zones formed by polymer material and the zones formed by the film/foil itself may alternate in a regular or irregular way.

Alternatively, it is also possible to form the relief on a film/foil by means of polymer material, but with the polymer material covering the entire surface of the film/foil.

Not according to the invention, it is also possible to provide the relief in the film/foil, in which case the film/foil has the same chemical composition across its entire surface. Such a film/foil may, for example, form part of the first barrier layer as a top layer.

In preferred embodiments, the relief is a regularly repeating relief pattern across the surface of the insulation panel. This regularly repeating relief pattern may be formed, for example by means of screen-printing or by means of structured rollers, using polymer material.

Alternatively, the relief may also be arbitrary across the surface of the insulation panel.

Preferably, the relief comprises a height difference of between 0.07 and 0.3 mm, preferably between 0.12 and 0.17 mm. It has been found that these height differences are sufficient to obtain the advantages of the invention.

Preferably, the projection of the relief on the surface of the insulation panel forms a pattern of units, for example a pattern of circles.

Preferably, the projection of the relief on the surface of the insulation panel comprises or consists of one or more of a pattern of circles, a diamond pattern, a pattern of hexagons, a line pattern or a grid pattern.

In embodiments in which the projection of the relief on the surface of the insulation panel comprises a pattern of circles, the diameter of the circles is preferably between 0.2 and 0.6 mm, for example 0.33 mm.

In embodiments in which the projection of the relief on the surface of the insulation panel forms a pattern of units, for example a pattern of circles, the number of these units - for example circles - is between 30 and 60 per square centimetre of surface area of the insulation panel, for example 45 per square centimetre of surface area of the insulation panel.

The first barrier layer comprises an aluminium foil or the first barrier layer consists of an aluminium foil. Preferably, this aluminium foil has a thickness of more than 5 micrometres, for example 6 or 8 micrometres. If the first barrier layer consists of an aluminium foil, this preferably has a thickness of more than 40 micrometres, and more preferably of less than 75 micrometres, more preferably less than 60 micrometres.

Preferably, the first barrier layer comprises a multi-layered laminate or the first barrier layer consists of a multi-layered laminate. More preferably, the first barrier layer contains a polymer film on its surface, more preferably a polyester film, a polyethylene film or a polyvinylidene film. A polyvinylidene film has the advantage that bonding with a polymer material which forms the relief is easier and better. The first barrier layer contains one or more aluminium layers and preferably one or more paper layers (preferably Kraft paper). More preferably, the first barrier layer is a gas-tight barrier layer and the laminate is a gas-tight laminate.

Preferably, the first barrier layer is a gas-tight barrier layer. Gas-tight barrier layers may be used, for example, if the thermal insulation layer comprises or consists of a layer of polyurethane foam or a layer of polyisocyanurate foam.

In preferred embodiments of the invention, the first barrier layer is not gas-tight. More preferably, the first barrier layer is a perforated barrier layer. More preferably, the first barrier layer is configured as has already been described for the embodiments above, but it is in addition perforated according to a regular perforation pattern or in an irregular manner. First barrier layers which are not gas-tight may be used, for example, if the thermal insulation layer contains or consists of a phenol foam layer, for example a phenol formaldehyde foam layer.

Preferably, at least one pair of opposite lateral edges - and preferably both pairs of opposite lateral edges - of the insulation panel are provided with a tongue and groove in order to couple several such panels to each other in one and the same plane. More preferably, the tongue and the groove are positioned symmetrically with respect to the thickness of the insulation panel.

Preferably, at least one pair of opposite lateral edges - and preferably both pairs of opposite lateral edges - of the insulation panel are provided with L-shaped rebates for coupling several such panels to each other in one and the same plane.

Preferably, one or more laths - more preferably wooden laths - are attached to the first barrier layer. Preferably, with rectangular insulation panels, these laths are fitted in the longitudinal direction of the insulation panel. These laths make it possible to lay a roof covering, for example tiles or slates, more quickly.

Preferably, the insulation panel comprises a second barrier layer on the second side. More preferably, the second barrier layer has the same composition and the same properties as the first barrier layer.

In preferred embodiments the insulation panel comprises, on the surface of the second side, a further layer which forms a second relief - preferably a structured relief pattern - across this surface of the insulation panel. More preferably this second relief is formed by polymer material. Such insulation panels have the advantage that both sides of the panel can be used as the top side; and provide the advantages of the invention. Such embodiments may be important when sawing panels in order to prevent waste by turning over remains of such insulation panels and use them in this way.

Preferably, the further layer comprises one or more of the features of the layer as described in the embodiments mentioned. More preferably, the second barrier layer consists of the same material as the first barrier layer; and the further layer has the same features as the layer.

Preferably, the insulation panel has a length of between 1000 and 2500 mm and/or a width of between 500 and 1300 mm.

The second aspect of the invention is a pitched roof as in claim 14. The pitched roof comprises a roof boarding or roof trusses. On the outside of the roof boarding or the roof trusses, one or more insulation panels such as in any of the embodiments of the first aspect of the invention as decribed in the claims are attached, with the first barrier layer facing the outside of the roof.

Preferably, one or more insulation panels are attached to the outside of the roof boarding or the roof trusses, with the second barrier layer facing the outside of the roof; and wherein the insulation panel comprises a further layer on the surface of the second side which forms a second relief - preferably a structured relief pattern - across this surface of the insulation panel.

The invention will be explained further in the examples.
Fig. 1 diagrammatically shows a pitched roof comprising insulation panels according to the invention.
Fig. 2 diagrammatically shows an insulation panel according to the invention.
Figs. 3-6 diagrammatically show examples of the surface of insulation which comprise regularly repeating relief patterns.
Fig. 7 shows a section of the cross section along VII-VII of the insulation panel according to the invention from Fig. 6.
Fig. 8 shows - in an identical illustration as in Fig. 7 - a portion of an insulation panel according to the invention.

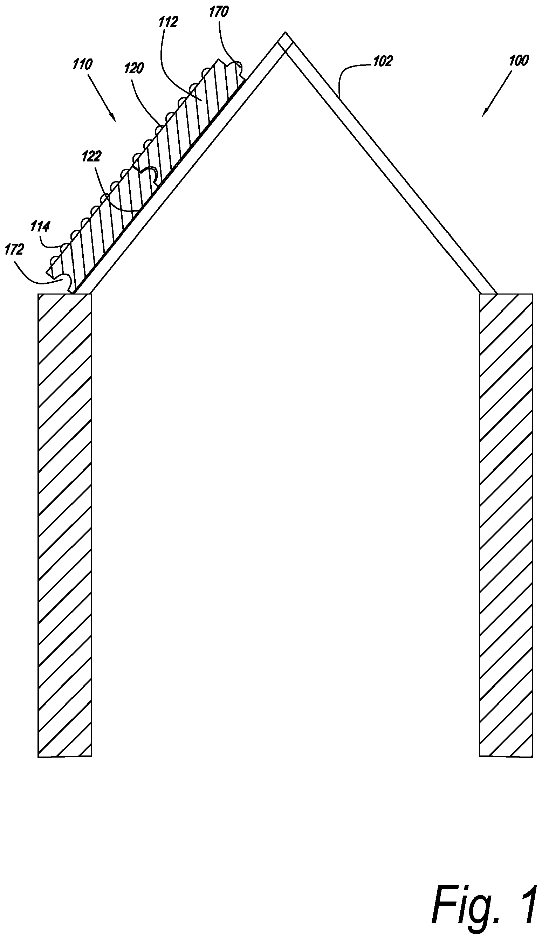

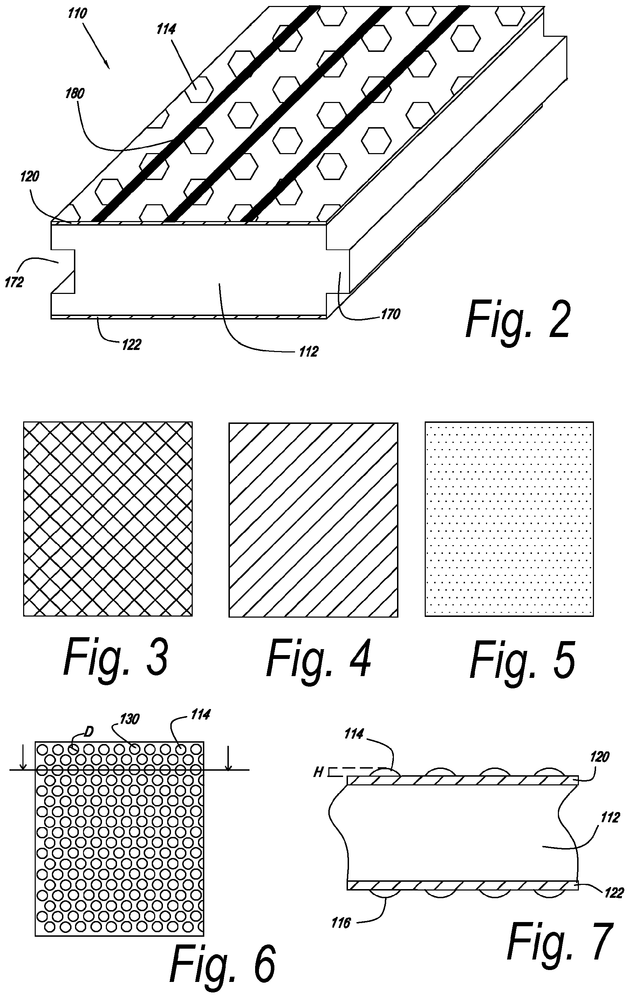

Fig. 1 diagrammatically shows a pitched roof (100) comprising examples of insulation panels (110) according to the invention. Fig. 1 does not show all details of the insulation panel. Fig. 2 diagrammatically shows this insulation panel according to the invention in more detail. The pitched roof (100) contains roof trusses (102). On the outside of the roof trusses, insulation panels (110) according to the first aspect of the invention are attached. These insulation panels (110) comprise a thermal insulation layer (112) and a first barrier layer (120). In the example, the first barrier layer (120) is a gas-tight barrier layer and the thermal insulation layer (112) is a polyisocyanurate foam layer comprising closed cells. This polyisocyanurate foam layer is provided on the first gas-tight barrier layer and bonded thereto. The first gas-tight barrier layer (120) of the insulation panel (110) faces the outside of the roof.

On a pair of opposite lateral edges, the insulation panel is provided with a tongue (170) and groove (172) in order to couple several such panels to each other in one and the same plane. Obviously, it is also possible for the insulation panel to be provided with a tongue and groove on both pairs of opposite lateral edges of the insulation panel.

The insulation panel comprises a thermal insulation layer (112); and, on one side of the thermal insulation layer, a first gas-tight barrier layer (120).

On the surface of the side which comprises the first gas-tight barrier layer, the insulation panel contains a layer (114) which forms a relief - preferably a structured relief pattern - across this surface of the insulation panel. In the example from Fig. 2, this layer - and this relief - are formed by discrete hexagonal units of polyvinyl chloride deposited onto the first gas-tight barrier layer according to a regular pattern. Between these hexagonal units, the first gas-tight barrier layer (120) is still visible and tangible. These hexagonal units result in height differences which form the relief, the height difference is, for example, between 0.12 and 0.17 mm. Preferably, this polyvinyl chloride contains plasticizers.

In order to improve the bond of the polyvinyl chloride to the first gas-tight barrier layer, the first gas-tight barrier layer may, for example, comprise a varnish layer or the top layer of the first gas-tight barrier layer may consist of a polyvinylidene film.

The insulation panel from Figs. 1 and 2 contains a second gas-tight barrier layer (122) on the second side. It is particularly advantageous if the first (120) and the second (122) gas-tight barrier layers have the same composition.

On the insulation panel of the example, a number of wooden laths (180) are attached to the first gas-tight barrier layer.

Figs. 3-6 diagrammatically show examples of the surface of insulation panels which contain regularly repeating relief patterns.

Fig. 3 shows an example in which the projection of the relief-forming material on the surface forms a grid pattern.

Fig. 4 shows an example in which the projection of the relief-forming material forms a line pattern on the surface.

Fig. 5 shows an example in which the projection of the relief-forming material on the surface forms a regular pattern of points.

Fig. 6 shows an alternative example. In the example from Fig. 6, the layer (114) which forms the relief consists of convex coating deposits of polymer material, for example polyvinyl chloride. In this case, the projection of the relief-forming material on the surface of the insulation panel forms a regular pattern of circles (130). The diameter (D) of these circles is, for example, 0.33 mm. There are, for example, 45 such circles of polymer material per square centimetre surface of the insulation panel.

Fig. 7 shows a section of the cross section along VII-VII of the insulation panel according to the invention from Fig. 6. The insulation panel contains a thermal insulation layer (112); and, on one side of the thermal insulation layer, a first gas-tight barrier layer (120) and, on the other side of the thermal insulation layer, a second gas-tight barrier layer (122) having the same composition as the first gas-tight barrier layer (120). In the example from Fig. 6, the layer (114) which forms the relief consists of convex coating deposits made from polymer material, with a height H of preferably between 0.12 and 0.17 mm. The polymer mass (preferably polyvinyl chloride) in this layer which forms the relief is, for example, 15 grams per square metre. The outside of the barrier layer (120) may be formed by a film/foil - for example a polyester film or a polyethylene film - on which the convex coating deposits of polymer material - for example polyvinyl chloride, and preferably polyvinyl chloride containing plasticizer - are deposited. Preferably, the polymer of the film differs from the polymer of the polymer material forming the relief.

The first barrier layer (120) may for example - viewed from the thermal insulation layer and in this order - comprise the following layers: a polyester film/foil (e.g. a polyethylene film), an aluminium foil, a polymer film, one or more layers of paper for stability (preferably Kraft paper), and a polyester film. The convex coating deposits (for example made of polyvinyl chloride and preferably of polyvinyl chloride containing plasticizers) are then deposited on the polyester film. The polyester film - containing the convex coating deposits thereon - may be disposed in the barrier layer by lamination (for example by means of a layer of glue).

A further layer (116) is applied to the second gas-tight barrier layer (122) in the same way and with the same dimensions. As a result thereof, both sides of this insulation panel are provided with a relief.

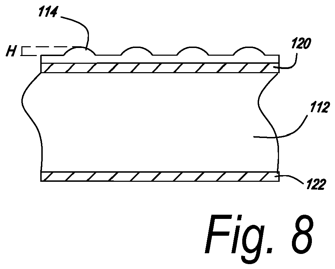

Fig. 8 shows - in an identical illustration as in Fig. 7 - a section of an insulation panel. The insulation panel contains a thermal insulation layer (112); and, on one side of the thermal insulation layer, a first gas-tight barrier layer (120) and, on the other side of the thermal insulation layer, a second gas-tight barrier layer (122) having the same composition as the first gas-tight barrier layer (120). The insulation panel illustrated in Fig. 8 contains a layer (114) forming the relief on the first gas-tight barrier layer (120). The layer (114) forming the relief may be produced in the following ways not according to the claimed invention: this layer may consist of a film/foil - preferably a plastic film - which itself has a relief and which is laminated on the first gas-tight barrier layer (120); this film/foil preferably has the same composition across its entire surface.

According to the invention, this layer (114) may be formed by depositing a polymer layer on the entire surface of the first gas-tight barrier layer, but in which the relief is produced by locally applying more polymer material. According to this embodiment, the entire surface of the first gas-tight barrier layer is covered with the polymer material.

Alternatively, according to the invention the layer (114) from Fig. 8 may be formed by a film/foil on which polymer material is deposited locally to form the relief, similar to the method of the example from Fig. 7.

## Claims

1. Insulation panel (110),
wherein the insulation panel comprises a thermal insulation layer (112) and, on one side of the thermal insulation layer, a first barrier layer (120);
wherein the thermal insulation layer (112) comprises or consists of a foam layer comprising closed cells;
wherein the foam layer is bonded to the first barrier layer;
wherein the insulation panel, on the surface of the side which comprises the first barrier layer, has a layer (114) which forms a relief - preferably a structured relief pattern - across this surface of the insulation panel;
wherein this relief is formed by polymer material;
wherein the polymer material which forms the relief is situated on the first barrier layer; and
wherein the layer (114) which forms the relief is formed by convex coating deposits (114) of the polymer material on the first barrier layer (120);
wherein the first barrier layer comprises or consists of an aluminium foil, wherein the aluminium foil preferably has a thickness of more than 5 micrometres.

2. Insulation panel (110) as in Claim 1, wherein the convex coating deposits are applied as discrete amounts of polymer on a plastic film which is laminated on or in the first barrier layer.

3. Insulation panel as in any of the preceding claims, wherein the polymer material is a thermoplast, preferably polyvinyl chloride, more preferably polyvinyl chloride containing plasticizers.

4. Insulation panel as in any of the preceding claims, wherein the mass of the polymer material is between 10 and 20 grams per square metre of surface area of the insulation panel.

5. Insulation panel as in any of the preceding Claims 1 - 4, wherein, on the surface of the insulation panel which has the relief - in a preferably regularly alternating way - zones are formed by the polymer material and zones are formed by the first barrier layer.

6. Insulation panel as in any of the preceding Claims 1 - 4, wherein the entire surface of the first barrier layer is covered by the polymer material.

7. Insulation panel as in any of the preceding claims, wherein the relief is a regularly repeating relief pattern across the surface of the insulation panel.

8. Insulation panel as in any of the preceding claims, wherein the relief forms a height difference (H) of between 0.07 and 0.3 mm, preferably between 0.12 and 0.17 mm.

9. Insulation panel as in any of the preceding claims, wherein the projection of the relief on the surface of the insulation panel comprises or consists of one or more of a pattern of units, for example of circles (130), a diamond pattern, a pattern of hexagons, a line pattern or a grid pattern.

10. Insulation panel as in Claim 9, wherein the projection of the relief on the surface of the insulation panel comprises a pattern of circles (130), wherein the diameter (D) of the circles is between 0.2 and 0.6 mm.

11. Insulation panel as in Claims 9 or 10, wherein the projection of the relief on the surface of the insulation panel comprises a pattern of units, for example a pattern of circles, wherein the number of units - for example circles - is between 30 and 60 per square centimetres of surface area of the insulation panel.

12. Insulation panel as in any of the preceding claims, wherein one or more laths (180) - preferably wooden laths - are attached to the first barrier layer.

13. Insulation panel as in any of the preceding claims, wherein the insulation panel comprises a second barrier layer (122) on the second side; preferably wherein the second barrier layer has the same composition and properties as the first barrier layer; wherein the insulation panel, on the surface of the side which comprises the second barrier layer, comprises a layer which forms a relief across this surface of the insulation panel, wherein this layer and this relief are formed in the same way as the relief on the surface of the side of the insulation panel which comprises the first barrier layer.

14. Pitched roof (100), wherein the pitched roof comprises a roof boarding of roof trusses (102) and wherein, on the outside of the roof boarding or the roof trusses, one or more insulation panels (110) as in any of the preceding claims are attached, with the first barrier layer (120) facing the outside of the roof, preferably wherein one or more laths (180) - preferably wooden laths - are attached to the first barrier layer.

## Patentansprüche

1. Paneel zum Bereitstellen einer Isolierung (110),
wobei das Paneel, das eine Isolierung bereitstellt, eine Schicht (112), die eine Wärmeisolierung bereitstellt, und auf einer Seite der Schicht, die eine Wärmeisolierung bereitstellt, eine erste Sperrschicht (120) umfasst;
wobei die Schicht (112), die eine Wärmeisolierung bereitstellt, eine Schaumstoffschicht umfasst, die geschlossene Zellen umfasst oder aus einer solchen Schicht besteht;
wobei die Schaumstoffschicht mit der ersten Sperrschicht verbunden ist;
wobei das Paneel, das eine Isolierung bereitstellt, auf der Oberfläche der Seite, die die erste Sperrschicht umfasst, eine Schicht (114) besitzt, die ein Relief - vorzugsweise ein Muster in der Form eines strukturierten Reliefs - über die gesamte Ausdehnung dieser Oberfläche des Paneels, das eine Isolierung bereitstellt, bildet;
wobei das Relief durch ein Polymermaterial gebildet wird;
wobei das Polymermaterial, welches das Relief bildet, sich auf der ersten Sperrschicht befindet; und
wobei die Schicht (114), die das Relief bildet, durch konvexe Beschichtungsablagerungen (114) des Polymermaterials auf der ersten Sperrschicht (120) gebildet wird;
wobei die erste Sperrschicht eine Aluminiumfolie umfasst oder aus dieser besteht; wobei die Aluminiumfolie vorzugsweise eine Dicke besitzt, die größer als 5 µm ist.

2. Paneel zum Bereitstellen einer Isolierung (110) nach Anspruch 1, wobei die konvexen Beschichtungen in Form diskreter Mengen eines Polymermaterials auf eine Kunststofffolie aufgebracht sind, die auf oder in die erste Sperrschicht laminiert ist.

3. Paneel zum Bereitstellen einer Isolierung nach einem der vorhergehenden Ansprüche, wobei das Polymermaterial ein thermoplastisches Material darstellt, vorzugsweise Polyvinylchlorid, besonders bevorzugt Weichmacher enthaltende Polyvinylchlorid.

4. Paneel zum Bereitstellen einer Isolierung nach einem der vorhergehenden Ansprüche, wobei die Masse des Polymermaterials zwischen 10 und 20 Gramm pro Quadratmeter der Oberfläche des Paneels, das eine Isolierung bereitstellt, liegt.

5. Paneel zum Bereitstellen einer Isolierung nach einem der vorhergehenden Ansprüche 1 bis 4, wobei auf der Oberfläche des Paneels, das eine Isolierung bereitstellt, die das Relief besitzt - in einer Weise, die eine vorzugsweise regelmäßige Abwechslung erzielt -, Bereiche durch das Polymermaterial gebildet werden und Bereiche durch die erste Sperrschicht gebildet werden.

6. Paneel zum Bereitstellen einer Isolierung nach einem der vorhergehenden Ansprüche 1 bis 4, wobei die gesamte Oberfläche der ersten Sperrschicht mit dem Polymermaterial bedeckt ist.

7. Paneel zum Bereitstellen einer Isolierung nach einem der vorhergehenden Ansprüche, wobei das Relief ein Muster in der Form eines Reliefs darstellt, das sich regelmäßig über die gesamte Oberfläche des Paneels, das eine Isolierung bereitstellt, wiederholt.

8. Paneel zum Bereitstellen einer Isolierung nach einem der vorhergehenden Ansprüche, wobei das Relief einen Höhenunterschied (H) zwischen 0,07 und 0,3 mm, vorzugsweise zwischen 0,12 und 0,17 mm, bildet.

9. Paneel zum Bereitstellen einer Isolierung nach einem der vorhergehenden Ansprüche, wobei der Vorsprung des Reliefs auf der Oberfläche des Paneels, das eine Isolierung bereitstellt, ein oder mehrere Muster umfasst, die aus einem Muster in der Form von Einheiten, beispielsweise in der Form von Kreisen (130), einem rautenförmigen Muster, einem Muster in der Form von Sechsecken, einem linearen Muster oder einem Muster in der Form eines Gitternetzes ausgewählt sind.

10. Paneel zum Bereitstellen einer Isolierung nach Anspruch 9, wobei der Vorsprung des Reliefs auf der Oberfläche des Paneels, das eine Isolierung bereitstellt, ein Muster in der Form von Kreisen (130) umfasst; wobei der Durchmesser (D) der Kreise zwischen 0,2 und 0,6 mm liegt.

11. Paneel zum Bereitstellen einer Isolierung nach Anspruch 9 oder 10, wobei der Vorsprung des Reliefs auf der Oberfläche des Paneels, das eine Isolierung bereitstellt, ein Muster in der Form von Einheiten umfasst, beispielsweise ein Muster in der Form von Kreisen; wobei die Anzahl von Einheiten - beispielsweise Kreisen - zwischen 30 und 60 pro Quadratzentimeter der Oberflächenfläche des Paneels, das eine Isolierung bereitstellt, liegt.

12. Paneel zum Bereitstellen einer Isolierung nach einem der vorhergehenden Ansprüche, wobei eine oder mehrere Latten (180) - vorzugsweise Holzlatten - an der ersten Sperrschicht befestigt sind.

13. Paneel zum Bereitstellen einer Isolierung nach einem der vorhergehenden Ansprüche, wobei das Paneel, das eine Isolierung bereitstellt, eine zweite Sperrschicht (122) auf der zweiten Seite umfasst; vorzugsweise wobei die zweite Sperrschicht die gleiche Zusammensetzung und die gleichen Eigenschaften wie die erste Sperrschicht besitzt; wobei das Paneel, das eine Isolierung bereitstellt, auf der Oberfläche der Seite, die die zweite Sperrschicht umfasst, eine Schicht umfasst, die ein Relief über diese gesamte Oberfläche des Paneels, das eine Isolierung bereitstellt, bildet; wobei diese Schicht und dieses Relief auf die gleiche Weise hergestellt sind wie das Relief auf der Oberfläche der Seite des Paneels, das eine Isolierung bereitstellt, die die erste Sperrschicht umfasst.

14. Schrägdach (100), wobei das Schrägdach eine Dachschalung oder eine Dachstühle (102) umfasst; und wobei an der Außenseite der Dachschalung oder der Dachstühle eine oder mehrere Paneele (110), die eine Isolierung gemäß einem der vorhergehenden Ansprüche bereitstellen, an der ersten Sperrschicht (120) befestigt sind, die zur Außenseite des Dachs gerichtet ist; wobei vorzugsweise eine oder mehrere Latten (180) - vorzugsweise Holzlatten - an der ersten Sperrschicht, befestigt sind.

## Revendications

1. Panneau procurant une isolation (110),
dans lequel le panneau procurant une isolation comprend une couche (112) procurant une isolation thermique et, sur un côté de la couche procurant une isolation thermique, une première couche barrière (120) ;
dans lequel la couche (112) procurant une isolation thermique comprend une couche de mousse comprenant des alvéoles fermés ou est constituée d'une telle couche ;
dans lequel la couche de mousse est collée à la première couche barrière;
dans lequel le panneau procurant une isolation, sur la surface du côté qui comprend la première couche barrière, possède une couche (114) qui forme un relief - de préférence un motif sous la forme d'un relief structuré - sur toute l'étendue de cette surface du panneau procurant une isolation ;
dans lequel ce relief est réalisé par l'intermédiaire d'une matière polymère ;
dans lequel la matière polymère qui forme le relief est située sur la première couche barrière ; et
dans lequel la couche (114) qui forme le relief est réalisée par l'intermédiaire de dépôts de revêtement convexes (114) de la matière polymère sur la première couche barrière (120);
dans lequel la première couche barrière comprend une feuille d'aluminium ou est constituée de cette dernière ; dans lequel la feuille d'aluminium possède de préférence une épaisseur qui est supérieure à 5 µm.

2. Panneau procurant une isolation (110) selon la revendication 1, dans lequel les dépôts de revêtement convexes sont appliqués sous la forme de quantités discrètes d'une matière polymère sur un film en matière plastique qui est stratifié sur ou dans la première couche barrière.

3. Panneau procurant une isolation selon l'une quelconque des revendications précédentes, dans lequel la matière polymère représente une matière thermoplastique, de préférence du chlorure de polyvinyle, de manière plus préférée du chlorure de polyvinyle contenant des plastifiants.

4. Panneau procurant une isolation selon l'une quelconque des revendications précédentes, dans lequel la masse de la matière polymère se situe entre 10 et 20 grammes par mètre carré de l'aire de surface du panneau procurant une isolation.

5. Panneau procurant une isolation selon l'une quelconque des revendications précédentes 1 à 4, dans lequel, sur la surface du panneau procurant une isolation, qui possède le relief - d'une manière qui permet d'obtenir une alternance de préférence régulière -, des zones sont formées par la matière polymère et des zones sont formées par la première couche barrière.

6. Panneau procurant une isolation selon l'une quelconque des revendications précédentes 1 à 4, dans lequel la totalité de la surface de la première couche barrière est recouverte par la matière polymère.

7. Panneau procurant une isolation selon l'une quelconque des revendications précédentes, dans lequel le relief représente un motif sous la forme d'un relief qui se répète de manière régulière sur toute la surface du panneau procurant une isolation.

8. Panneau procurant une isolation selon l'une quelconque des revendications précédentes, dans lequel le relief forme une différence de hauteur (H) entre 0,07 et 0,3 mm, de préférence entre 0,12 et 0,17 mm.

9. Panneau procurant une isolation selon l'une quelconque des revendications précédentes, dans lequel la saillie du relief sur la surface du panneau procurant une isolation comprend ou est constituèe de un ou plusieurs motifs choisis parmi un motif sous la forme d'unités, par exemple sous la forme de cercles (130), un motif en forme de losange, un motif sous la forme d'hexagones, un motif linéaire ou un motif sous la forme d'un quadrillage.

10. Panneau procurant une isolation selon la revendication 9, dans lequel la saillie du relief sur la surface du panneau procurant une isolation comprend un motif sous la forme de cercles (130) ; dans lequel le diamètre (D) des cercles se situe entre 0,2 et 0,6 mm.

11. Panneau procurant une isolation selon la revendication 9 ou 10, dans lequel la saillie du relief sur la surface du panneau procurant une isolation comprend un motif sous la forme d'unités, par exemple un motif sous la forme de cercles ; dans lequel le nombre d'unités - par exemple de cercles - se situe entre 30 et 60 par centimètre carré de l'aire de surface du panneau procurant une isolation.

12. Panneau procurant une isolation selon l'une quelconque des revendications précédentes, dans lequel une ou plusieurs lattes (180) - de préférence des lattes en bois - sont fixées à la première couche barrière.

13. Panneau procurant une isolation selon l'une quelconque des revendications précédentes, dans lequel le panneau procurant une isolation comprend une deuxième couche barrière (122) sur le deuxième côté ; de préférence dans lequel la deuxième couche barrière possède la même composition et les mêmes propriétés que celles de la première couche barrière ; dans lequel le panneau procurant une isolation, sur la surface du côté qui comprend la deuxième couche barrière, comprend une couche qui forme un relief sur toute cette surface du panneau procurant une isolation ; dans lequel cette couche et ce relief sont réalisés de la même manière que le relief sur la surface du côté du panneau procurant une isolation, qui comprend la première couche barrière.

14. Toit en pente (100), dans lequel le toit en pente comprend un bardage de toiture ou une ferme de toiture (102) ; et dans lequel, sur le côté externe du bardage de toiture ou de la ferme de toiture, un ou plusieurs panneaux (110) procurant une isolation, conformément à l'une quelconque des revendications précédentes, sont fixés à la première couche barrière (120) orientée vers l'extérieur du toit ; de préférence, dans lequel une ou plusieurs lattes (180) - de préférence, des lattes en bois - sont fixées à la première couche barrière.
